# EUROPEAN PATENT APPLICATION

(11) **EP 1 959 091 A1**
(43) Date of publication of application: **20.08.2008**
(21) Application number: 06823327.9
(22) Date of filing: 13.11.2006
(51) Int. Cl.: E21B 10/32, B28D 1/14, E21B 17/046

(54) **DIAMETER EXPANDING GROOVE CUTTING DEVICE AND EXPANDING/CONTRACTING MECHANISM TOOL**

(30) Priority: 14.11.2005 JP 2005329288; 09.03.2006 JP 2006064877
(71) Applicant: KABUSHIKI KAISHA MIYANAGA, Miki-shi, Hyogo 673-0433 (JP)
(72) Inventor: MIYANAGA, Masaaki, Hyogo 673-0521 (JP)
(74) Representative: Leinweber & Zimmermann
(86) International application number: PCT/JP2006/322553
(87) International publication number: WO 2007/055353

(57) **Abstract**

To provide a diametrically expanded groove cutting apparatus capable of simultaneously cutting a plurality of diametrically expanded annular grooves on an inner peripheral wall of an anchor prepared hole for planting an anchor bar therein, and to provide an expandable mechanism used in the diametrically expanded groove cutting apparatus.

A diametrically expanded groove cutting apparatus (11) comprising: a main body portion (12) including a shank (12a) to be coupled to an electrical device; an intermediate expandable mechanism (13) and a tip end side expandable mechanism (14) disposed along an axial direction so as not to rotate with respect to the main body portion (12), the electrical device applying an axial rotation to the diametrically expanded groove cutting apparatus (11) to cause the diametrically expanded groove cutting apparatus (11) to be able to cut upper and lower diametrically expanded annular grooves (3) on an inner peripheral wall of an anchor prepared hole (2) for planting an anchor bar therein by using cutting blades (8) disposed on the expandable mechanisms (13) and (14), wherein: the diametrically expanded groove cutting apparatus (11) is extensible; and the cutting blades (8) diametrically expand or contract by a retracting operation or an extending operation of the diametrically expanded groove cutting apparatus (11).

## Description

### Technical Field

The present invention relates to a diametrically expanded groove cutting apparatus capable of cutting a plurality of diametrically expanded annular grooves on an inner peripheral wall of an anchor prepared hole for planting an anchor bar therein, and an expandable mechanism used in the diametrically expanded groove cutting apparatus.

### Background Art

One example of a conventional diametrically expanded groove cutting apparatus will be explained with reference to Figs. 15(a) and 15(b) (see Patent Document 1 for example). A diametrically expanded groove cutting apparatus 1 shown in Figs. 15(a) and 15 (b) can cut one diametrically expanded annular groove 3 on an inner peripheral wall of an anchor prepared hole 2 for planting an anchor bar therein.

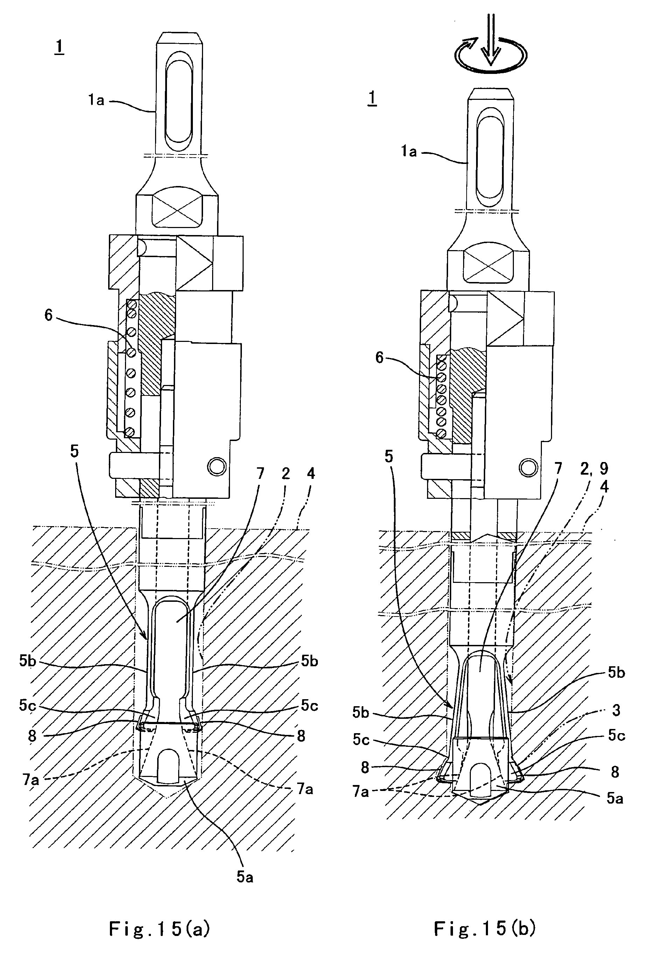

In the case of cutting the diametrically expanded annular groove 3 on the inner peripheral wall of the anchor prepared hole 2 using the diametrically expanded groove cutting apparatus 1, first, as shown in Fig. 15(a), the anchor prepared hole 2 is cut on, for example, a concrete floor surface 4 using a prepared hole drill (not shown). Then, an expandable mechanism 5 of the diametrically expanded groove cutting apparatus 1 is inserted into the anchor prepared hole 2. A shank 1a is formed at an upper end of the diametrically expanded groove cutting apparatus 1, and is attached to a chuck of a rotation vibration electrical device (not shown).

Next, as shown in Fig. 15(b), an operator drives the electrical device and presses against the bottom of the anchor prepared hole 2 a guide head 5a that is a tip end of the diametrically expanded groove cutting apparatus 1 attached to the electrical device. By driving the electrical device, the diametrically expanded groove cutting apparatus 1 rotates in a predetermined direction and is applied with vibration for applying impact on the bottom of the anchor prepared hole 2. By the impact with respect to the bottom of the anchor prepared hole 2 and a pressing force applied by the operator in a downward direction, a pair of flexible portions 5b move downward against the spring force of a compression spring 6 and become a diametrically expanded state shown in Fig. 15(b). To be specific, when the pair of flexible portions 5b move downward, slide portions 5c disposed on respective lower ends of the flexible portions 5b also move downward accordingly. When the slide portions 5c move downward, the slide portions 5c are guided to respective inclined surfaces 7a of a guide head 5a formed at a lower end of a core body 7 and diametrically expand. Here, the flexible portions 5b deform. The slide portions 5c include cutting blades 8 which project outwardly.

In a case where the diametrically expanded groove cutting apparatus 1 rotates in a state in which the cutting blades 8 diametrically expand, one diametrically expanded annular groove 3 can be cut on the inner peripheral wall of the anchor prepared hole 2 by the diametrically expanded cutting blades 8 (see Fig. 15(b)). An anchor bar (not shown), such as a bolt, can be planted by inserting the anchor bar into an anchor hole 9 thus cut, filling the anchor hole 9 with a bonding material, such as epoxy, and fixing the anchor bar.

In a state in which the impact is not applied to the bottom of the anchor prepared hole 2 by the electrical device or the pressing force is not applied by the operator, the pair of flexible portions 5b move upward by the spring force of the compression spring 6, and the flexible portions 5b deform such that the cutting blades (slide portions 5c) 8 diametrically contract. Therefore, the diametrically expanded groove cutting apparatus 1 can be pulled out from the anchor hole 9.
Patent Document 1: Japanese Utility Model Application Publication No. Hei. 3-29590

### Disclosure of the Invention

### Problems to be Solved by the Invention

However, the problem of the conventional diametrically expanded groove cutting apparatus 1 shown in Figs. 15(a) and 15(b) is that, for example, two diametrically expanded annular grooves 3 cannot be cut simultaneously on the inner peripheral wall of the anchor prepared hole 2. The reason why two diametrically expanded annular grooves 3 are cut is to increase a bonding strength between the anchor bar and the inner peripheral wall of the anchor hole 9 by the bonding material to obtain a high resistance to a pull-out force.

A method for cutting two diametrically expanded annular grooves 3 on the inner peripheral wall of the anchor prepared hole 2 using the conventional diametrically expanded groove cutting apparatus 1 is, for example, as follows. First, a comparatively shallow first anchor prepared hole is cut using the prepared hole drill. Then, as shown in Figs. 15(a) and 15(b), a first diametrically expanded annular groove 3 is cut on the inner peripheral wall of the first anchor prepared hole. Next, a second anchor prepared hole is cut on the bottom of the first anchor prepared hole further deeply using the prepared hole drill. Then, as shown in Figs. 15(a) and 15(b), a second diametrically expanded annular groove 3 is cut on the inner peripheral wall of the second anchor prepared hole. Thus, the first and second diametrically expanded annular grooves 3 can be cut on the inner peripheral walls of the first and second anchor prepared holes 2, respectively.

However, the problem of this method is that cutting the first and second diametrically expanded annular grooves 3 in this manner takes time and trouble.

The present invention was made to solve the above problems, and an object of the present invention is to provide a diametrically expanded groove cutting apparatus which can simultaneously cut a plurality of diametrically expanded annular grooves on an inner peripheral wall of an anchor prepared hole for planting an anchor bar therein and which can be easily pulled out from the anchor hole with less time if the diametrically expanded groove cutting apparatus remains diametrically expanded and does not diametrically contract due to, for example, cutting powder, and to provide an expandable mechanism used in the diametrically expanded groove cutting apparatus.

### Means for Solving the Problems

A diametrically expanded groove cutting apparatus according to the present invention includes: a main body portion including a shank to be coupled to a driving portion; and a plurality of expandable mechanisms disposed along an axial direction so as not to rotate with respect to the main body portion, the driving portion applying an axial rotation to the diametrically expanded groove cutting apparatus to cause the diametrically expanded groove cutting apparatus to be able to cut a plurality of diametrically expanded annular grooves on an inner peripheral wall of an anchor prepared hole for planting an anchor bar therein by using cutting blades disposed on the expandable mechanisms, wherein: the diametrically expanded groove cutting apparatus is extensible; and the cutting blades diametrically expand or contract by a retracting operation or an extending operation of the diametrically expanded groove cutting apparatus.

In the case of cutting the diametrically expanded annular groove on the inner peripheral wall of the anchor prepared hole using the diametrically expanded groove cutting apparatus according to the present invention, for example, first, the anchor prepared hole is cut on a concrete floor surface using a prepared hole drill. Then, the shank formed on an upper end of the diametrically expanded groove cutting apparatus is attached to a chuck of a rotation vibration driving portion, the plurality of expandable mechanisms are inserted into the anchor prepared hole, and the tip end portion of the diametrically expanded groove cutting apparatus is pressed against the bottom of the anchor prepared hole. Next, an operator drives the driving portion. Then, the diametrically expanded groove cutting apparatus rotates in a predetermined direction and is applied with vibration for applying impact on the bottom of the anchor prepared hole. By the impact with respect to the bottom of the anchor prepared hole and the pressing force by the operator, the diametrically expanded groove cutting apparatus retracts. By this retraction, the cutting blades disposed on the expandable mechanisms become the diametrically expanded state. In a case where the cutting blades rotate in the diametrically expanded state, a plurality of diametrically expanded annular grooves can be cut on the inner peripheral wall of the anchor prepared hole by the diametrically expanded cutting blades. The anchor bar can be planted in the anchor hole by inserting the anchor bar into the anchor hole, filling the anchor hole with a bonding material and hardening the bonding material. In a case where the impact with respect to the bottom of the anchor prepared hole and the pressing force are not applied, the cutting blades move upward so as to diametrically contract. Therefore, the diametrically expanded groove cutting apparatus can be pulled out from the anchor hole.

In the diametrically expanded groove cutting apparatus according to the present invention, among the plurality of expandable mechanisms, an intermediate expandable mechanism coupled between a tip end side expandable mechanism disposed on a tip end side of the diametrically expanded groove cutting apparatus and the main body portion may be removably attached to the tip end side expandable mechanism, the main body portion and the other intermediate expandable mechanism, and the intermediate expandable mechanism may include a stiff portion sandwiched between the tip end side expandable mechanism and the main body portion. In accordance with the diametrically expanded groove cutting apparatus, in the case of cutting two diametrically expanded annular grooves on the inner peripheral wall of the anchor prepared hole for example, the main body portion, one intermediate expandable mechanism and the tip end side expandable mechanism may be coupled to one another. In the case of cutting three or more (a desired number of) diametrically expanded annular grooves, a required number of the intermediate expandable mechanisms may be coupled to one another based on the number of the diametrically expanded annular grooves to be cut. Note that the tip end side expandable mechanism and the intermediate expandable mechanism can be fixedly attached to the main body portion by the stiff portion.

Further, in the diametrically expanded groove cutting apparatus according to the present invention, the tip end side expandable mechanism may be removably attached to the main body portion. With this, the tip end side expandable mechanism can be directly attached to the main body portion without attaching the intermediate expandable mechanism to the main body portion. Therefore, using this diametrically expanded groove cutting apparatus, one diametrically expanded annular groove can be cut on the inner peripheral wall of the anchor prepared hole. Thus, it is possible to provide a diametrically expanded groove cutting apparatus capable of cutting one or a plurality of (a required number of) diametrically expanded annular grooves on the inner peripheral wall of the anchor prepared hole by directly attaching the tip end side expandable mechanism to the main body portion or by coupling a required number of the intermediate expandable mechanisms.

In the diametrically expanded groove cutting apparatus according to the present invention, each of the expandable mechanisms may include a core body which is coupled so as to be movable with respect to the main body portion in the axial direction within a predetermined range and is biased in an extending direction by biasing means, and a flexible portion having an elastic property; an expandable guiding portion may be formed at a tip end portion of the core body; the flexible portion may include at a tip end portion thereof a slide portion which is guided by the expandable guiding portion so as to diametrically expand or contract; and the cutting blade may be disposed on the slide portion. In the case of cutting a plurality of diametrically expanded annular grooves on the inner peripheral wall of the anchor prepared hole using the diametrically expanded groove cutting apparatus, a plurality of expandable mechanisms are inserted into the anchor prepared hole, and the core body at the tip end of the diametrically expanded groove cutting apparatus is pressed against the bottom of the anchor prepared hole. Next, the operator drives the driving portion, and the driving portion applies the rotations and the impact vibrations with respect to the diametrically expanded groove cutting apparatus. Then, the slide portions of the flexible portions are guided by the expandable guiding portions of the core bodies, and diametrically expand while moving downward (here, the core body retracts). Thus, the cutting blades disposed on the slide portions diametrically expand. A plurality of diametrically expanded annular grooves can be cut simultaneously by the diametrically expanded cutting blades.

In a case where the driving portion is stopped, or the pressing force by the operator with respect to the diametrically expanded groove cutting apparatus decreases, the pressing force of the core body at the tip end of the diametrically expanded groove cutting apparatus with respect to the bottom of the anchor prepared hole decreases, and the core bodies are biased by biasing means and extend. In a case where the core bodies move in the extending direction, the slide portions of the flexible portions are guided by the expandable guiding portions and diametrically contract while moving upward. Thus, the cutting blades disposed on the slide portions diametrically contract. Therefore, a plurality of expandable mechanisms can be pulled out from the anchor hole with the cutting blades diametrically contracted.

Moreover, an expandable mechanism according to the present invention is an expandable mechanism used in a diametrically expanded groove cutting apparatus capable of cutting a diametrically expanded annular groove on an inner peripheral wall of a preformed anchor prepared hole, wherein: the expandable mechanism is able to be detachably coupled to a main body portion included in the diametrically expanded groove cutting apparatus and the other expandable mechanism; the expandable mechanism includes a core body which is coupled so as to be movable with respect to the main body portion in an axial direction within a predetermined range, and a flexible portion having an elastic property; an expandable guiding portion is formed at a tip end portion of the core body; the flexible portion includes at a tip end portion thereof a slide portion which is guided by the expandable guiding portion so as to diametrically expand or contract; and a cutting blade is disposed on the slide portion.

Since the expandable mechanism according to the present invention functions in the same manner as the expandable mechanism according to claim 4, an explanation thereof is omitted.

Further, the diametrically expanded groove cutting apparatus according to the present invention is a diametrically expanded groove cutting apparatus comprising: a main body portion including a shank to be coupled to a driving portion; and an expandable mechanism disposed so as not to rotate with respect to the main body portion, the diametrically expanded groove cutting apparatus being able to cut a diametrically expanded annular groove on an inner peripheral wall of an anchor prepared hole for planting an anchor bar therein by causing a cutting blade formed on the expandable mechanism to rotate by applying an axial rotation to the main body portion using the driving portion, , wherein: the expandable mechanism includes a core body; the core body is disposed so as to be extensible with respect to the main body portion; the cutting blade diametrically expands or contracts by a retracting operation or an extending operation of the core body; the main body portion includes a cotter hole or a cotter groove; and the cotter hole or the cotter groove is able to cause the core body to move with respect to the main body portion in an extending direction by a cotter hit into the cotter hole or the cotter groove.

In the case of cutting the diametrically expanded annular groove on the inner peripheral wall of the anchor prepared hole using the diametrically expanded groove cutting apparatus according to the present invention, for example, first, the anchor prepared hole is cut on the concrete floor surface using the prepared hole drill. Then, the shank formed on the upper end of the diametrically expanded groove cutting apparatus is attached to the chuck of the rotation vibration driving portion, the expandable mechanism is inserted into the anchor prepared hole, and the tip end portion (tip end portion of the core body) is pressed against the bottom of the anchor prepared hole. Next, the operator drives the driving portion. Then, the diametrically expanded groove cutting apparatus rotates in a predetermined direction and is applied with vibration for applying impact on the bottom of the anchor prepared hole. By the impact with respect to the bottom of the anchor prepared hole and the pressing force by the operator, the diametrically expanded groove cutting apparatus retracts. By this retraction, the cutting blades become the diametrically expanded state. In a case where the cutting blades rotate in the diametrically expanded state, the diametrically expanded annular groove can be cut on the inner peripheral wall of the anchor prepared hole by the diametrically expanded cutting blades. The anchor bar can be planted in the cut anchor hole in the same manner as before. Since the cutting blades move upward so as to diametrically contract in a state in which the impact, etc. is not applied to the bottom of the anchor prepared hole, the diametrically expanded groove cutting apparatus can be pulled out from the anchor hole.

In some cases, for example, the diametrically expanded cutting blades do not return to the diametrically contracted state due to clogging of the cutting powder in the expandable mechanism, and the diametrically expanded groove cutting apparatus cannot be pulled out from the anchor hole. In such cases, by hitting the cotter into the cotter hole or the cotter groove, the core body is caused to move with respect to the main body portion in the extending direction. Thus, since it is possible to cause the diametrically expanded cutting blades to diametrically contract, the diametrically expanded groove cutting apparatus can be pulled out from the anchor hole.

The diametrically expanded groove cutting apparatus according to the present invention may further includes: a main body side sleeve and a core body side sleeve disposed so as to be movable with respect to the main body portion in an axial direction; biasing means for biasing the main body side sleeve and the core body side sleeve in such a direction that the main body side sleeve and the core body side sleeve are separated from each other; and a stopper projection which is disposed on the main body portion to stop a movement of the main body side sleeve in such a direction that the main body side sleeve is separated from the core body side sleeve, wherein in a state in which the core body side sleeve is coupled to the core body, and the main body side sleeve and the core body side sleeve are in contact with each other, part of the cotter hole or the cotter groove may be covered by the main body side sleeve. With this, it is possible to cause the main body side sleeve and the core body side sleeve to be separated from each other by biasing means. Here, since the main body side sleeve engages with the stopper projection, the core body side sleeve and the core body coupled thereto can be biased with respect to the main body portion in the extending direction. In a case where the core body extends as above, the cutting blades diametrically contract. Next, in a case where the core body is caused to retract against the biasing force of the biasing means, the cutting blades diametrically expand. Even if the main body side sleeve and the core body side sleeve are caused to contact each other with the cutting blades diametrically expanded, part of the cotter hole or the like is covered by the main body side sleeve, and the rest of the cotter hole or the like opens outside. Therefore, by hitting the cotter into the opening of the cotter hole or the like, it is possible to cause the core body to extend, and to forcibly cause the diametrically expanded cutting blades to diametrically contract.

In the diametrically expanded groove cutting apparatus according to the present invention, a plurality of the expandable mechanisms may be included; among the plurality of the expandable mechanisms, an intermediate expandable mechanism coupled between a tip end side expandable mechanism disposed on a tip end side of the diametrically expanded groove cutting apparatus and the main body portion may be removably attached to the tip end side expandable mechanism and the main body portion; the intermediate expandable mechanism may include a stiff portion sandwiched between the tip end side expandable mechanism and the main body portion; and the tip end side expandable mechanism may be removably attached to the main body portion. In accordance with the diametrically expanded groove cutting apparatus, for example, in the case of cutting two diametrically expanded annular grooves on the inner peripheral wall of the anchor prepared hole, the main body portion, one intermediate expandable mechanism and the tip end side expandable mechanism may be coupled to each other. In the case of cutting one diametrically expanded annular groove, the tip end side expandable mechanism may be directly coupled to the main body portion without coupling the intermediate expandable mechanism to the main body portion. Note that the tip end side expandable mechanism and the intermediate expandable mechanism can be fixedly attached to the main body portion by the stiff portion.

Further, in the diametrically expanded groove cutting apparatus according to the present invention, the intermediate expandable mechanism may be removably attached to the other intermediate expandable mechanism. In the case of cutting three or more (a desired number of) diametrically expanded annular grooves on the inner peripheral wall of the anchor prepared hole using the diametrically expanded groove cutting apparatus, a required number of the intermediate expandable mechanisms may be coupled to one another based on the number of the diametrically expanded annular grooves to be cut. Thus, a plurality of (a required number of) diametrically expanded annular grooves can be cut.

In the diametrically expanded groove cutting apparatus according to the present invention, the expandable mechanism may include the core body which is coupled so as to be movable with respect to the main body portion in the axial direction within a predetermined range and is biased in the extending direction by the biasing means, and a flexible portion having an elastic property; an expandable guiding portion may be formed at a tip end portion of the core body; the flexible portion may include at a tip end portion thereof a slide portion which is guided by the expandable guiding portion so as to diametrically expand or contract; and the cutting blade may be disposed on the slide portion. In the case of cutting the diametrically expanded annular groove on the inner peripheral wall of the anchor prepared hole using the diametrically expanded groove cutting apparatus, the expandable mechanism is inserted into the anchor prepared hole, and the core body at the tip end of the diametrically expanded groove cutting apparatus is pressed against the bottom of the anchor prepared hole. Next, the operator drives the driving portion, and the driving portion applies the rotations and the impact vibrations with respect to the diametrically expanded groove cutting apparatus. Then, the slide portion of the flexible portion is guided by the expandable guiding portion disposed on the core body, and diametrically expands while moving downward (here, the core body retracts). Thus, the cutting blade disposed on the slide portion diametrically expands. The diametrically expanded annular groove can be cut by the diametrically expanded cutting blade.

In a case where the driving portion is stopped, or the pressing force by the operator with respect to the diametrically expanded groove cutting apparatus decreases, the pressing force of the core body at the tip end of the diametrically expanded groove cutting apparatus with respect to the bottom of the anchor prepared hole decreases, and the core body is biased by the biasing means and extends. In a case where the core body moves in the extending direction, the slide portion of the flexible portion is guided by the expandable guiding portion and diametrically contracts while moving upward. Thus, the cutting blade disposed on the slide portion diametrically contracts. Therefore, the expandable mechanism can be pulled out from the anchor hole with the cutting blade diametrically contracted.

### Effects of the Invention

The diametrically expanded groove cutting apparatus according to the present invention is configured such that a plurality of expandable mechanisms are disposed along an axial direction, and cutting blades disposed on respective expandable mechanisms diametrically expand by a retracting operation of the diametrically expanded groove cutting apparatus. Therefore, by rotating the diametrically expanded groove cutting apparatus in this diametrically expanded state, a plurality of diametrically expanded annular grooves can be simultaneously cut on the inner peripheral wall of the anchor prepared hole. On this account, it is possible to cut an anchor hole by which the high resistance to the pull-out force can be obtained easily with less trouble and time than before.

Further, the diametrically expanded groove cutting apparatus according to the present invention is configured such that the diametrically expanded cutting blades can be diametrically contracted forcibly by hitting a cotter into a cotter hole or a cotter groove. Therefore, in a case where the diametrically expanded groove cutting apparatus cannot be pulled out from the anchor hole since the diametrically expanded cutting blades do not diametrically contract due to clogging of, for example, cutting powder in the expandable mechanism, it is possible to extremely easily and forcibly contract the diametrically expanded cutting blades with less time by hitting the cotter into the cotter hole or the like. Therefore, the diametrically expanded groove cutting apparatus can be easily pulled out from the anchor hole.

### Brief Description of the Drawings

[Figs. 1] Figs. 1 show a diametrically expanded groove cutting apparatus according to Embodiment 1 of the present invention.
Fig. 1(a) is a partially cross sectional front view showing a state where cutting blades of an intermediate expandable mechanism and a tip end side expandable mechanism diametrically contract, and Fig. 1(b) is a partially cross sectional front view showing a state where the cutting blades diametrically expand.
[Fig. 2] Fig. 2 is a partially cross sectional side view showing a diametrically contracted state of the diametrically expanded groove cutting apparatus shown in Fig. 1(a).
[Figs. 3] Figs. 3 show a state where the intermediate expandable mechanism of Embodiment 1 is disassembled. Fig. 3(a) is a partially cross sectional front view, and Fig. 3(b) is a partially cross sectional side view.
[Figs. 4] Figs. 4 show a state where the intermediate expandable mechanism of Embodiment 1 is attached to a main body portion. Fig. 4(a) is a partially cross sectional front view, and Fig. 4(b) is a partially cross sectional side view.
[Figs. 5] Figs. 5 show a core body included in the intermediate expandable mechanism of Embodiment 1. Fig. 5(a) is a front view, Fig. 5(b) is a bottom view, Fig. 5(c) is a side view, Fig. 5(d) is an A-A end view, and Fig. 5(e) is a B-B cross sectional view.
[Figs. 6] Figs. 6 show a state in which the tip end side expandable mechanism of Embodiment 1 is disassembled. Fig. 6(a) is a partially cross sectional front view, and Fig. 6(b) is a partially cross sectional side view.
[Figs. 7] Figs. 7 show a state where the tip end side expandable mechanism of Embodiment 1 is attached to the intermediate expandable mechanism. Fig. 7(a) is a partially cross sectional front view, and Fig. 7(b) is a partially cross sectional side view.
[Figs. 8] Figs. 8 show a core body included in the tip end side expandable mechanism of Embodiment 1. Fig. 8(a) is a front view, Fig. 8(b) is a bottom view, Fig. 8(c) is a side view, Fig. 8(d) is a C-C end view, and Fig. 8(e) is a D-D cross sectional view.
[Figs. 9] Figs. 9 are diagrams for explaining a procedure of cutting a diametrically expanded annular groove using the diametrically expanded groove cutting apparatus of Embodiment 1. Fig. 9(a) is a longitudinal sectional view showing a state where an anchor prepared hole is cut by a prepared hole drill, Fig. 9(b) is a longitudinal sectional view showing the anchor prepared hole, and Fig. 9(c) is a longitudinal sectional view showing a state where the tip end side expandable mechanism, etc. is inserted into the anchor prepared hole.
[Figs. 10] Figs. 10 are diagrams for explaining a procedure of cutting the diametrically expanded annular groove using the diametrically expanded groove cutting apparatus of Embodiment 1. Fig. 10(a) is a longitudinal sectional view showing a state where the tip end side expandable mechanism, etc. inserted into the anchor prepared hole diametrically expand, Fig. 10(b) is a longitudinal sectional view showing the anchor hole on which upper and lower diametrically expanded annular grooves are cut, and Fig. 10(c) is a longitudinal sectional view showing an anchor bar planted in an anchor hole.
[Figs. 11] Figs. 11 show the diametrically expanded groove cutting apparatus of Embodiment 1. Fig. 11(a) is a partially cross sectional front view showing a state where two intermediate expandable mechanism and the tip end side expandable mechanism are attached to the main body portion, and Fig. 11(b) is a partially cross sectional front view showing a state where only the tip end side expandable mechanism is attached to the main body portion without attaching the intermediate expandable mechanism to the main body portion.
[Figs. 12] Figs. 12 show the diametrically expanded groove cutting apparatus according to Embodiment 2 of the present invention. Fig. 12(a) is a partially cross sectional front view showing a state where the cutting blades of the intermediate expandable mechanism and the tip end side expandable mechanism diametrically contract, and Fig. 12(b) is a partially cross sectional front view showing a state where the cutting blades diametrically expand.
[Fig. 13] Fig. 13 is a partially cross sectional side view showing a diametrically contracted state of the diametrically expanded groove cutting apparatus shown in Fig. 12(a).
[Figs. 14] Figs. 14 are diagrams for explaining a procedure of forcibly diametrically contracting the diametrically expanded groove cutting apparatus of Embodiment 2 which is in the diametrically expanded state. Fig. 14(a) is a partially cross sectional front view showing the diametrically expanded groove cutting apparatus in the diametrically expanded state before hitting the cotter, and Fig. 14(b) is a partially cross sectional front view showing the diametrically expanded groove cutting apparatus in the diametrically contracted state after hitting the cotter.
[Figs. 15] Figs. 15 show a conventional diametrically expanded groove cutting apparatus. Fig. 15(a) is a partially cross sectional front view showing a state where the cutting blades diametrically contract, and Fig. 15(b) is a partially cross sectional front view showing a state where the cutting blades diametrically expand.

### Explanation of Reference Numbers

- 2: anchor prepared hole
- 3: diametrically expanded annular groove
- 4: floor surface
- 8: cutting blade
- 11, 111: diametrically expanded groove cutting apparatus
- 12: main body portion
- 12a: shank
- 12b: attaching portion
- 12c: externally threaded portion
- 13: intermediate expandable mechanism
- 14: tip end side expandable mechanism
- 15: biasing mechanism
- 16: insertion hole
- 17: core body
- 17a, 24a: base end portion
- 17b, 17c, 20a, 27b: coupling hole
- 18, 33: coupling pin
- 19: elongate hole
- 20: core body
- 21: flexible portion
- 22: engaging concave portion
- 23: engaging convex portion
- 24, 36: exterior portion
- 25, 125: main body side sleeve
- 25a: internally threaded portion
- 26: compression spring
- 27: core body side sleeve
- 27a: tubular upper portion
- 28: expandable guiding portion
- 28a: bottom surface
- 29: stiff portion
- 30: slide portion
- 30a: inclined surface
- 31: projection
- 32: fitting hole
- 34: pin cover
- 37: step portion
- 38: guide head
- 38a: groove
- 39: prepared hole drill
- 40: cutting powder
- 41: anchor hole
- 42: anchor bar
- 43: bonding material

### Best Mode for Carrying Out the Invention

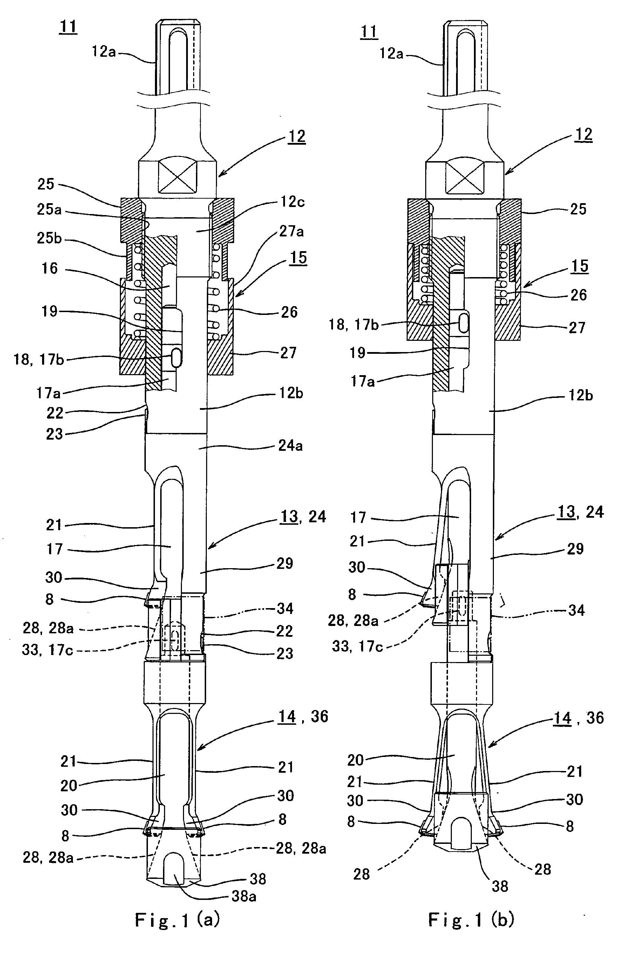

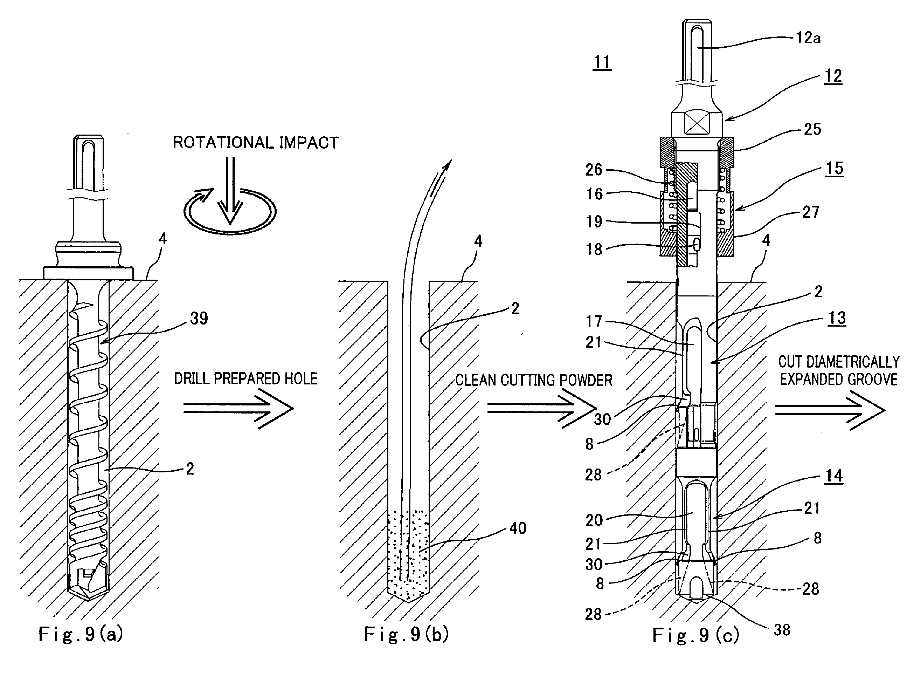

Hereinafter, Embodiment 1 of a diametrically expanded groove cutting apparatus and an expandable mechanism used therein according to the present invention will be explained with reference to Figs. 1 to 11. As shown in Figs. 9, 10 and 11, a diametrically expanded groove cutting apparatus 11 can cut a desired number (one or two or more) of diametrically expanded annular grooves 3 on an inner peripheral wall of an anchor prepared hole 2 for planting an anchor bar 42 therein, and is made of a metallic material.

### Embodiment 1

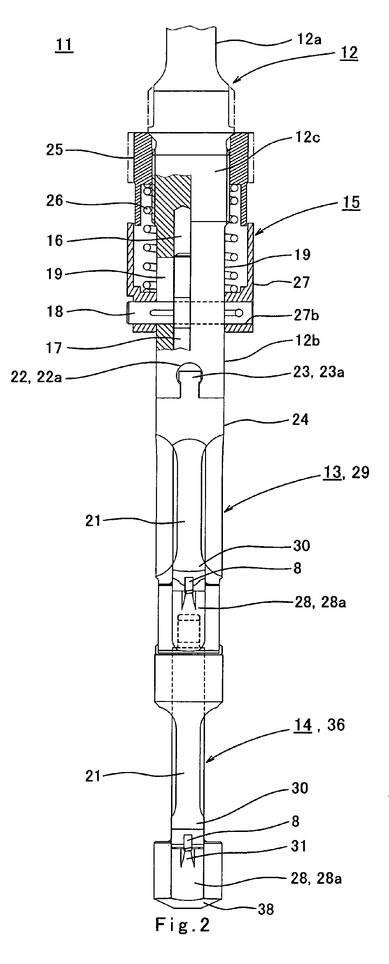

The diametrically expanded groove cutting apparatus 11 shown in Figs. 1(a) and 1(b) includes a main body portion 12, an intermediate expandable mechanism 13 and a tip end side expandable mechanism 14, and a shank 1a formed at an upper portion of the main body portion 12 can be used by being attached to a chuck of an electrical device (driving portion, not shown). The electrical device applies, for example, rotations and impact vibrations to the diametrically expanded groove cutting apparatus 11. Fig. 1(a) is a partially cross sectional front view of the diametrically expanded groove cutting apparatus 11, showing a state where cutting blades 8 of the intermediate expandable mechanism 13 and the tip end side expandable mechanism 14 diametrically contract, and Fig. 1(b) is a partially cross sectional front view of the diametrically expanded groove cutting apparatus 11, showing a state where the cutting blades 8 diametrically expand. Fig. 2 is a partially cross sectional side view showing a diametrically contracted state of the diametrically expanded groove cutting apparatus 11 shown in Fig. 1(a).

As shown in Fig. 1(a), the main body portion 12 is a rod-shaped body, a shank 1a is formed at its upper portion, and an attaching portion 12b is formed at its lower portion. The intermediate expandable mechanism 13 and a biasing mechanism 15 are attached to the attaching portion 12b.

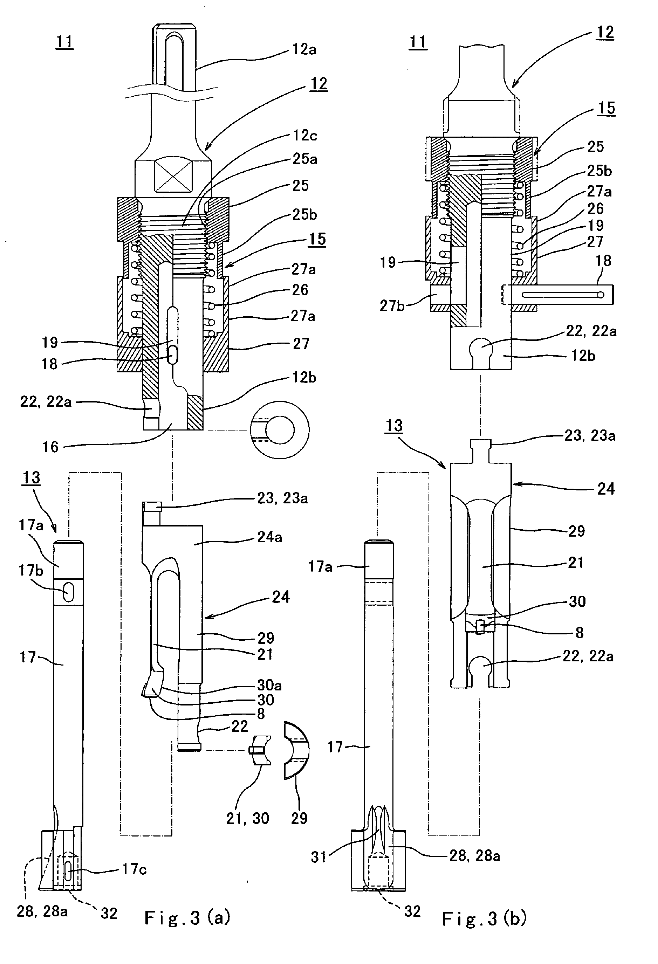

As shown in Figs. 3(a) and 3(b), the attaching portion 12b has a short cylindrical shape, and has an insertion hole 16 which opens at a center of a lower end surface thereof and extends in an axial direction so as to have a predetermined depth. A base end portion 17a of a core body 17 of the intermediate expandable mechanism 13 is inserted into this insertion hole 16, and the core body 17 is slidable in a vertical direction along the insertion hole 16. The insertion hole 16 has such an inner diameter that the core body 17 can be held so as not to move unstably.

As shown in Figs. 3(a) and 3(b), the core body 17 inserted into the insertion hole 16 has a coupling hole 17b, and a coupling pin 18 is inserted through the coupling hole 17b. The coupling pin 18 is inserted through a pair of elongate holes 19 formed on a peripheral wall of the attaching portion 12b. The coupling pin 18 locks the core body 17 such that the core body 17 does not rotate with respect to the attaching portion 12b around a center axis, and can couple the core body 17 to the attaching portion 12b. The pair of elongate holes 19 are formed so as to extend along a depth direction (axial direction) of the insertion hole 16, and the length of the elongate hole 19 defines a range in which the core body 17 to be inserted into the insertion hole 16 moves in an axial direction of the attaching portion 12b.

To be specific, as shown in Fig. 1(a), in a case where the coupling pin 18 is located at a lower end of the elongate hole 19, the core body 17 of the intermediate expandable mechanism 13 and the core body 20 of the tip end side expandable mechanism 14 (the core bodies 17 and 20 are coupled to each other) extend downward so as to be in an extended state, and the cutting blades 8 disposed on flexible portions 21 become the diametrically contracted state. In contrast, as shown in Fig. 1(b), in a case where the coupling pin 18 is located at an upper end of the elongate hole 19, the core bodies 17 and 20 move upward so as to be in a retracted state, and the cutting blades 8 disposed on the flexible portions 21 become the diametrically expanded state.

Moreover, as shown in Figs. 3(a) and 3(b), an engaging concave portion 22 is formed at a lower end opening edge of the attaching portion 12b. The engaging concave portion 22 engages with an engaging convex portion 23. The engaging convex portion 23 is formed at an upper edge of an exterior portion 24 included in the intermediate expandable mechanism 13, and is shaped so as to correspond to the engaging concave portion 22. The engaging concave portion 22 has a back portion 22a which is wider than an entrance portion of the engaging concave portion 22, and the engaging convex portion 23 has an upper end portion 23a which is wider in horizontal width than a base end portion of the engaging convex portion 23. Fig. 2 shows a state where the engaging convex portion 23 engages with the engaging concave portion 22. In this engaged state, the main body portion 12 and the exterior portion 24 can be coupled to each other such that their respective end portions are in close contact with each other, and they can engage with each other such that the exterior portion 24 does not rotate with respect to the main body portion 12 around the center axis.

Further, as shown in Figs. 3(a) and 3(b), a biasing mechanism 15 is attached to the attaching portion 12b. The biasing mechanism 15 biases the core body 17 of the intermediate expandable mechanism 13 in a downward direction (extending direction), and includes a main body side sleeve 25. An internally threaded portion 25a is formed on an inner peripheral surface of an upper portion of the main body side sleeve 25, and the internally threaded portion 25a threadedly engages with an externally threaded portion 12c formed on an outer peripheral surface of the attaching portion 12b. With this engagement, the main body side sleeve 25 is fixedly attached to the main body portion 12. A tubular lower portion 25b of the main body side sleeve 25 is formed so as to be spaced apart from an outer peripheral surface of the main body portion 12, and an upper end portion of a compression spring 26 is accommodated in this space. A lower end portion of the compression spring 26 is accommodated in a tubular upper portion 27a of a core body side sleeve 27. The tubular upper portion 27a is formed so as to be larger in diameter than the tubular lower portion 25b of the main body side sleeve 25. The core body side sleeve 27 has coupling holes 27b which are located so as to be opposed to each other, and the coupling pin 18 is inserted through the coupling holes 27b. The core body side sleeve 27 is movable in an axial direction (vertical direction) along an outer peripheral surface of the attaching portion 12b.

As shown in Fig. 1(a), the biasing mechanism 15 can bias the core body side sleeve 27 in the downward direction by the compression spring 26. By this biasing force, the coupling pin 18 attached to the core body side sleeve 27 contacts a lower edge of the elongate hole 19 and is stopped at this lower end position. In this state, the core body 17 of the intermediate expandable mechanism 13 and the core body 20 of the tip end side expandable mechanism 14 extend downward so as to be in the extended state, and the cutting blades 8 disposed on the flexible portions 21 become the diametrically contracted state. As shown in Fig. 1(b), in a case where a tip end portion (expandable guiding portion 28) of the core body 20 of the tip end side expandable mechanism 14 is pushed up against the spring force of the compression spring 26, and the core bodies 17 and 20 are caused to move upward so as to be in a retracted state, the cutting blades 8 of the flexible portions 21 become the diametrically expanded state. In this state, the coupling pin 18 is located at the upper end of the elongate hole 19 to be able to stop upward movement of the core bodies 17 and 20.

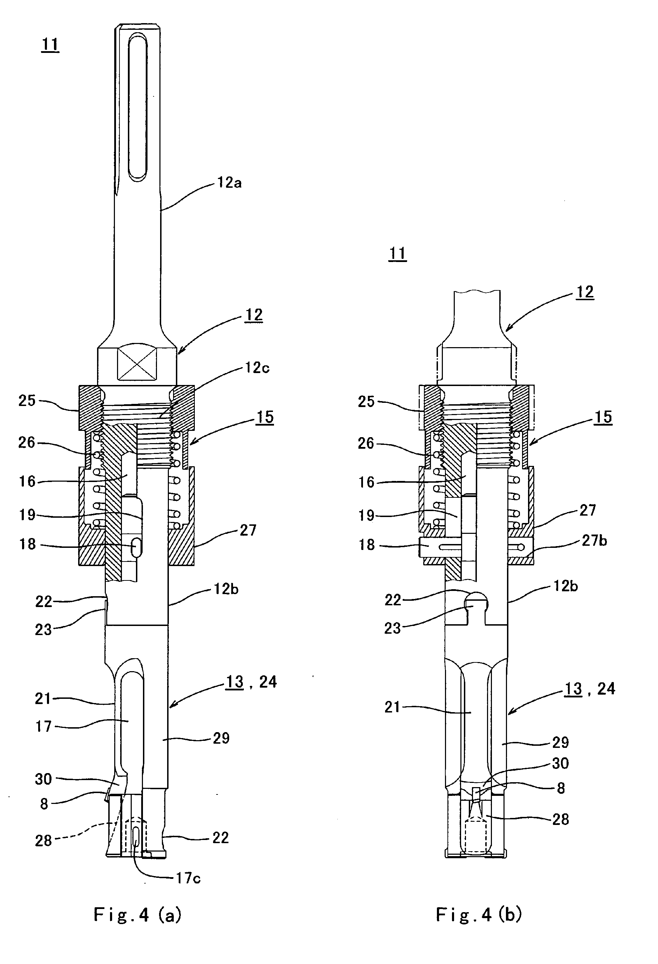

As shown in Figs. 3(a) and 3(b), the intermediate expandable mechanism 13 includes the exterior portion 24 and the core body 17. Fig. 3(a) is a disassembled partially cross sectional front view of the intermediate expandable mechanism 13, and Fig. 3(b) is a disassembled partially cross sectional side view of the intermediate expandable mechanism 13. Fig. 4(a) is a partially cross sectional front view showing a state where the intermediate expandable mechanism 13 is attached to the main body portion 12, and Fig. 4(b) is its partially cross sectional side view.

As shown in Fig. 3(a), the exterior portion 24 includes a short cylindrical base end portion 24a, and the engaging convex portion 23 is formed at an upper edge of the base end portion 24a. One flexible portion 21 and one stiff portion 29 extending in the downward direction are formed at a lower portion of the base end portion 24a.

The flexible portion 21 is formed by, for example, a plate-shaped metal having an elastic property, and is formed with a slide portion 30 at a lower end thereof. The slide portion 30 has the cutting blade 8 of a tip shape, and an edge portion of the cutting blade 8 project from an outer surface and lower end surface of the slide portion 30. An inner surface of the slide portion 30 which surface faces the core body 17 is formed as an inclined surface 30a so as to be inclined outward as it extends downward.

The stiff portion 29 has a substantially semicircular shape in cross section and is formed so as to be longer than the flexible portion 21. As shown in Fig. 3(a), each of inner surfaces of the flexible portion 21 and the stiff portion 29 is formed so as to have an arch shape in cross section such that a cylindrical portion of the core body 17 is slidably held.

Moreover, as shown in Fig. 3(b), an engaging concave portion (that is an equivalent of the engaging concave portion 22 of the main body portion) 22 is formed at a lower edge of the stiff portion 29. The engaging convex portion 23 engages with the engaging concave portion 22. The engaging convex portion 23 (that is an equivalent of the engaging convex portion 23 formed at an upper edge of the intermediate expandable mechanism 13) is formed on an upper edge of an exterior portion 36 included in the tip end side expandable mechanism 14, and is shaped so as to correspond to the engaging concave portion 22.

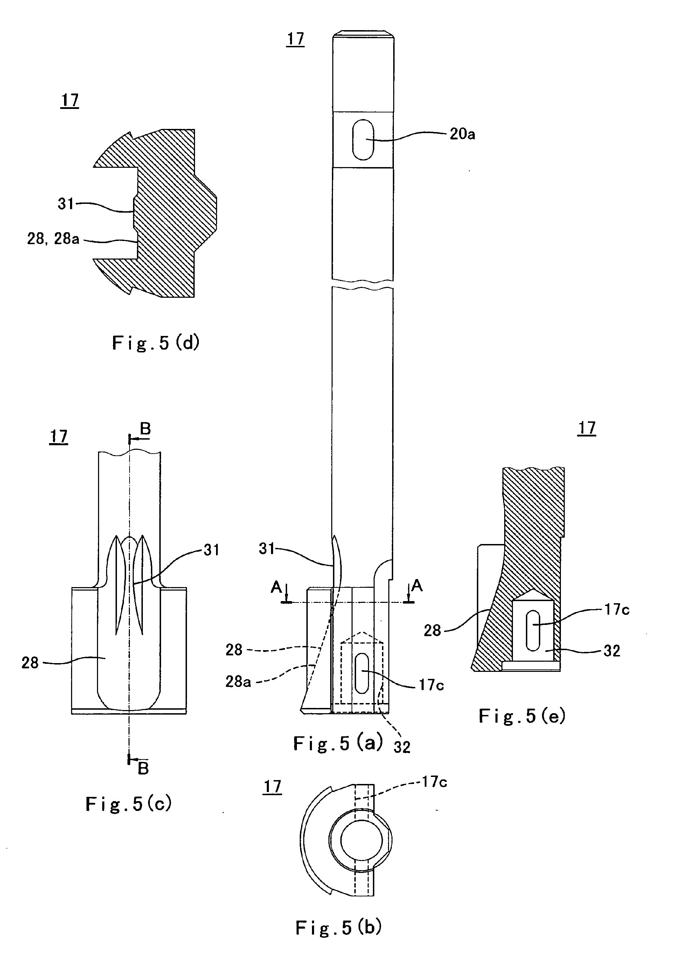

As shown in Figs. 3(a) and 3(b), the core body 17 has the coupling hole 17b at its upper end portion and the expandable guiding portion 28 at its lower end portion, as described above. As shown in Figs. 5(a), 5(b), 5(c), 5(d) and 5(e), the expandable guiding portion 28 is formed as an inclined guiding groove for guiding the slide portion 30 in an expansion/contraction direction. A bottom surface 28a of the expandable guiding portion 28 widens outward in the downward direction, and the width of the bottom surface 28a has such a size as to be able to guide the slide portion 30 in the expansion/contraction direction without unstable movement. The bottom surface 28a has a projection 31. The projection 31 engages with an inner surface of the slide portion 30 such that the slide portion 30 is not displaced around the axis. With this configuration, in the case of cutting the diametrically expanded annular groove 3, it is possible to prevent the slide portion 30 from being displaced in a circumferential direction by a cutting resistance, and cutting powder 40 do not substantially get into a space between the slide portion 30 and the expandable guiding portion 28. Moreover, as shown in Fig. 1(b), the bottom surface 28a of the expandable guiding portion 28 is formed at such an angle that when the cutting blades 8 is in the diametrically expanded state, the bottom surface 28a is substantially in parallel with the inclined surface 30a formed on an inner surface of the slide portion 30 and contacts the substantially entire inclined surface 30a. Also, with this, in the case of cutting the diametrically expanded annular groove 3, the slide portion 30 is held so as not to be displaced with respect to the expandable guiding portion 28.

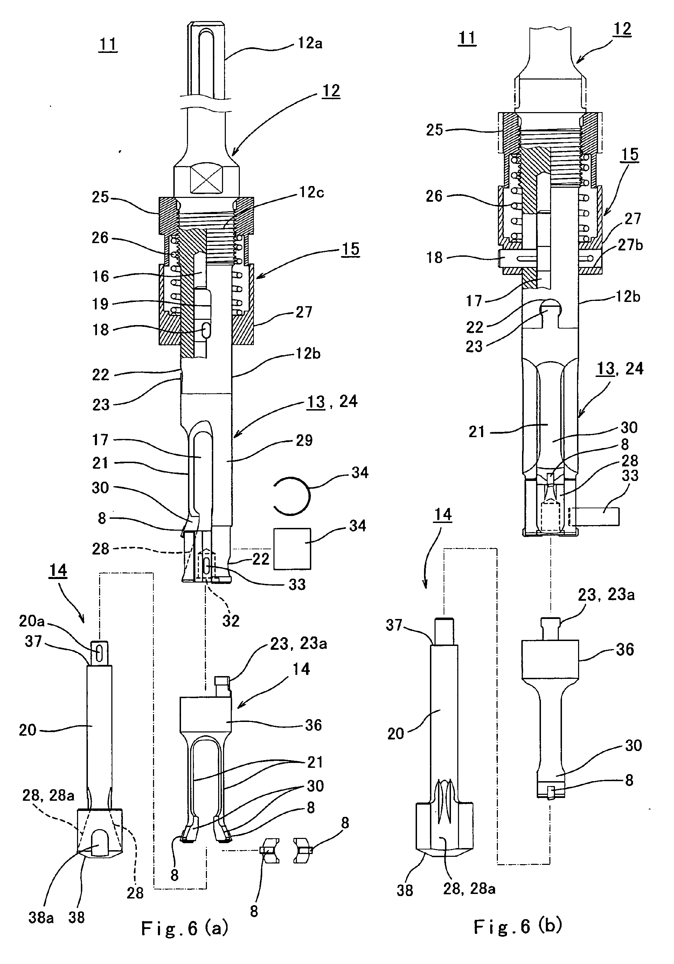

Moreover, as shown in Fig. 5(e), a fitting hole 32 and a coupling hole 17c for coupling a lower end portion of the core body 17 and an upper end portion of the core body 20 of the tip end side expandable mechanism 14 are formed at the lower end portion of the core body 17. The upper end portion of the core body 20 fits in the fitting hole 32. As shown in Fig. 1(a), the core body 17 and the core body 20 can be detachably coupled to each other by inserting a coupling pin 33 into the coupling hole 17c formed at the lower end portion of the core body 17 and a coupling hole 20a formed at the upper end portion of the core body 20 with the upper end portion of the core body 20 fitted in the fitting hole 32. In order to prevent the coupling pin 33 from disengaging from the coupling hole 17c, a pin cover 34 shown in Figs. 1(a) and 6(a) is detachably attached to a lower end outer surface of the stiff portion 29.

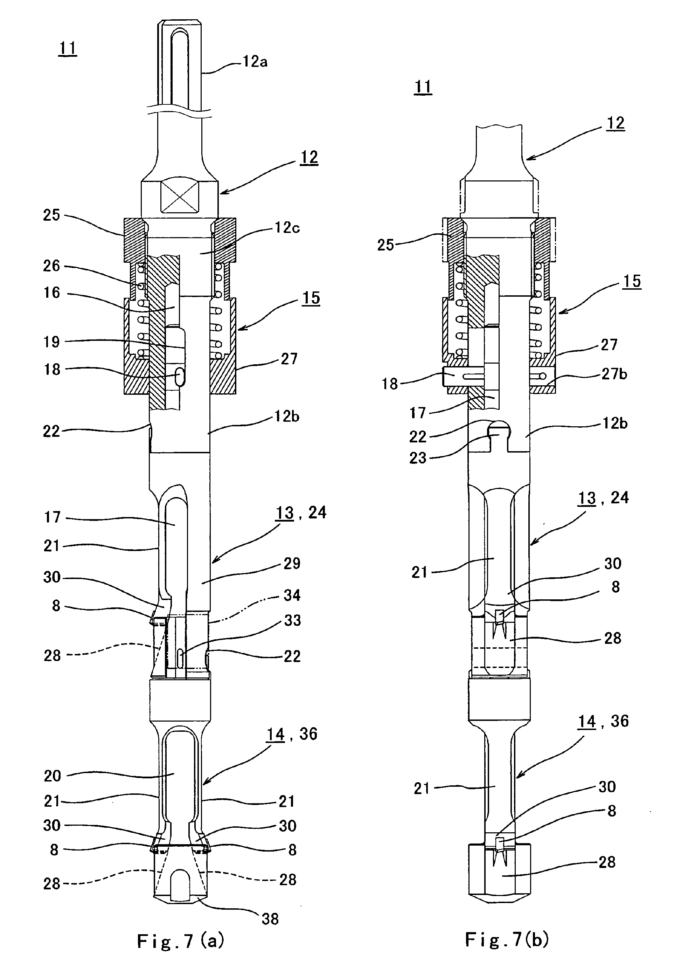

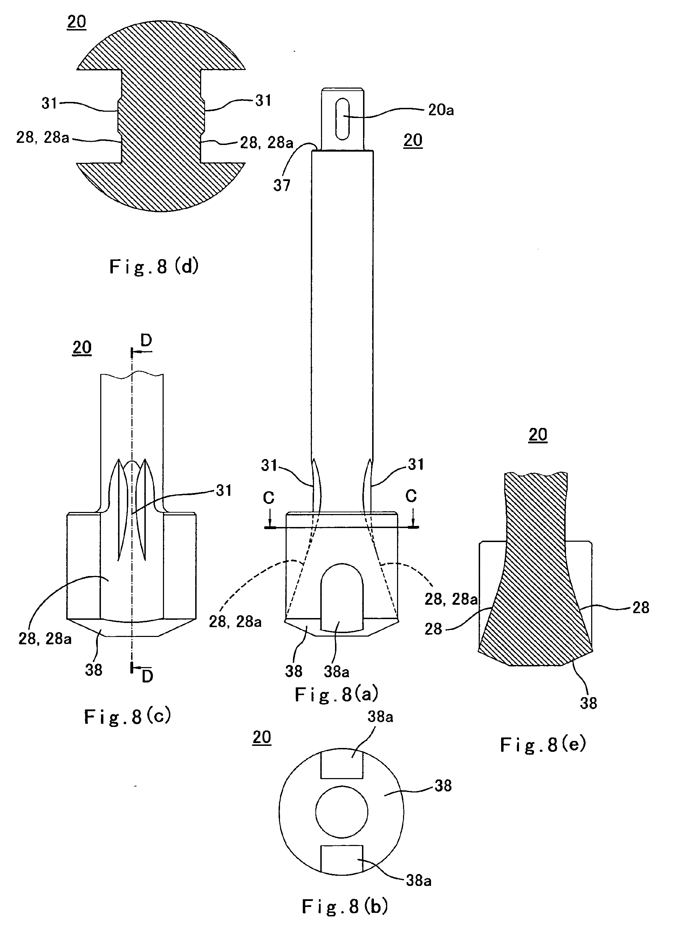

As shown in Figs. 6(a) and 6(b), the tip end side expandable mechanism 14 includes the exterior portion 36 and the core body 20. Fig. 6(a) is a disassembled partially cross sectional front view of the tip end side expandable mechanism 14, and Fig. 6(b) is a disassembled partially cross sectional side view of the tip end side expandable mechanism 14. Fig. 7(a) is a partially cross sectional front view showing a state where the tip end side expandable mechanism 14 is attached to the intermediate expandable mechanism 13, and Fig. 7(b) is its partially cross sectional side view. Figs. 8(a) to 8(e) are diagrams showing the core body 20.

Differences between the tip end side expandable mechanism 14 shown in Figs. 6(a) and 6(b) and the intermediate expandable mechanism 13 shown in Figs. 3(a) and 3(b) are the exterior portions 36 and 24 and the core bodies 20 and 17.

To be specific, the exterior portion 24 of the intermediate expandable mechanism 13 shown in Fig. 3(a) is configured to include one flexible portion 21 (the flexible portion 21 includes the slide portion 30 and the cutting blade 8) and one stiff portion 29 whereas the exterior portion 36 of the tip end side expandable mechanism 14 shown in Fig. 6(a) is configured to include two flexible portions 21 (each flexible portion 21 includes the slide portion 30 and the cutting blade 8) but not to include the stiff portion 29.

In the core body 17 of the intermediate expandable mechanism 13 shown in Fig. 3(a), an upper end portion where the coupling hole 17b is formed is formed so as to have the same diameter as a portion below this upper end portion. In contrast, in the core body 20 of the tip end side expandable mechanism 14 shown in Fig. 6(a), an upper end portion where the coupling hole 20a is formed is formed so as to be smaller in diameter than a portion below this upper end portion, and a step portion 37 is formed. The step portion 37 defines the fitting depth when the upper end of the core body 20 fits in the fitting hole 32 formed at the lower end of the core body 17.

As shown in Fig. 3(a), the core body 17 of the intermediate expandable mechanism 13 is configured to include the expandable guiding portion 28 on a left side of its lower end and the coupling hole 17c and the fitting hole 32 at the lower end portion. In contrast, as shown in Fig. 6(a), the core body 20 of the tip end side expandable mechanism 14 is configured to include two expandable guiding portions 28 on left and right sides of its lower end and a convex guide head 38 at the lower end portion but not to include the coupling hole 17c or the fitting hole 32. The guide head 38 has grooves 38a on its tip end surface. Except for these, the tip end side expandable mechanism 14 is the same as the intermediate expandable mechanism 13. The same reference numbers are used for the corresponding members, and explanations thereof are omitted.

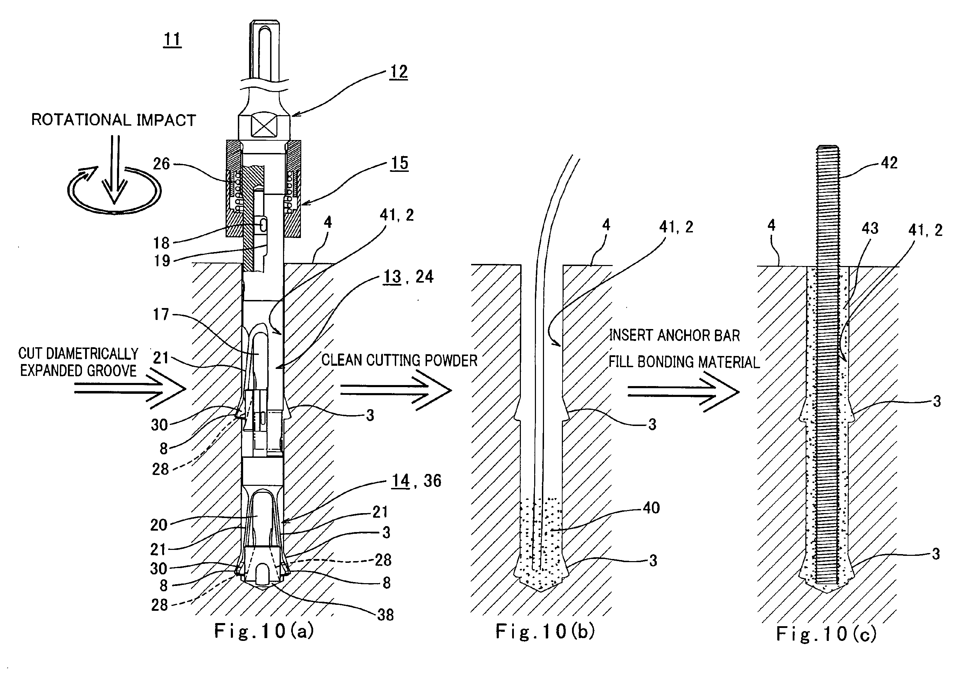

Next, a procedure of cutting two diametrically expanded annular grooves 3 on the inner peripheral wall of the anchor prepared hole 2 using the diametrically expanded groove cutting apparatus 11 shown in Figs. 1(a) and 1(b) configured as above will be explained with reference to Figs. 9 and 10. For example, as shown in Figs. 9(a) and 9(b), the anchor prepared hole 2 is cut on the concrete floor surface 4 using a prepared hole drill 39, and the cutting powder 40 in the prepared hole 2 is discharged (cleaned). Then, the shank 1a formed at the upper end of the diametrically expanded groove cutting apparatus 11 is attached to the chuck of the electrical device (rotation vibration driving portion), and as shown in Fig. 9(c), the tip end side expandable mechanism 14 and the intermediate expandable mechanism 13 attached to the diametrically expanded groove cutting apparatus 11 are inserted into the anchor prepared hole 2. The guide head 38 that is a tip end portion of the diametrically expanded groove cutting apparatus 11 is pressed against the bottom of the anchor prepared hole 2. Next, an operator drives the electrical device. As shown in Fig. 10(a), the diametrically expanded groove cutting apparatus 11 rotates in a predetermined direction and is applied with vibration for applying impact on the bottom of the anchor prepared hole 2. By the impact applied on the bottom of the anchor prepared hole 2 and a pressing force applied by the operator, the core bodies 17 and 20 coupled to each other are pushed upward against the spring force of the compression spring 26 (the exterior portions 24 and 36 are pressed downward). Thus, the diametrically expanded groove cutting apparatus 11 retracts.

When the core bodies 17 and 20 move in a direction in which they are pushed upward (direction in which the exterior portions 24 and 36 are pushed downward), the slide portions 30 of the flexible portions 21 of the tip end side expandable mechanism 14 and the intermediate expandable mechanism 13 are guided by the expandable guiding portions 28 of the corresponding core bodies 17 and 20, so that the slide portions 30 diametrically expand. With this, the upper and lower cutting blades 8 of the tip end side expandable mechanism 14 and the intermediate expandable mechanism 13 become the diametrically expanded state. Since the upper and lower cutting blades 8 in the diametrically expanded state can rotate, two diametrically expanded annular grooves 3 can be cut on upper and lower portions of the inner peripheral wall of the anchor prepared hole 2 by the diametrically expanded cutting blades 8.

If the electrical device is stopped or the pressing force of the operator with respect to the diametrically expanded groove cutting apparatus 11 decreases, the pressing force of the tip end guide head 38 of the diametrically expanded groove cutting apparatus 11 with respect to the bottom of the anchor prepared hole 2 decreases, and the core bodies 17 and 20 are biased by the compression spring 26 so as to extend. In a case where the core bodies 17 and 20 move in the extending direction (downward direction), the slide portions 30 disposed on the flexible portions 21 of the tip end side expandable mechanism 14 and the intermediate expandable mechanism 13 are guided by the expandable guiding portions 28 and diametrically contract while moving upward. With this, the cutting blades 8 disposed on the slide portions 30 diametrically contract. With the cutting blades 8 diametrically contracted, the tip end side expandable mechanism 14 and the intermediate expandable mechanism 13 can be pulled out from an anchor hole 41.

Next, as shown in Fig. 10(b), the cutting powder 40 in the cut anchor hole 41 is discharged (cleaned). Then, as shown in Fig. 10(c), the anchor bar 42, such as a bolt, is inserted into the anchor hole 41, and a bonding material 43, such as epoxy, is filled in the anchor hole 41. By hardening of the bonding material 43, the anchor bar 42 can be planted. As above, by using the diametrically expanded groove cutting apparatus 11, the upper and lower diametrically expanded annular grooves 3 can be simultaneously cut on the inner peripheral wall of the anchor prepared hole 2. Therefore, it is possible to cut the anchor hole 41 allowing the high resistance to the pull-out force easily with less trouble and time.

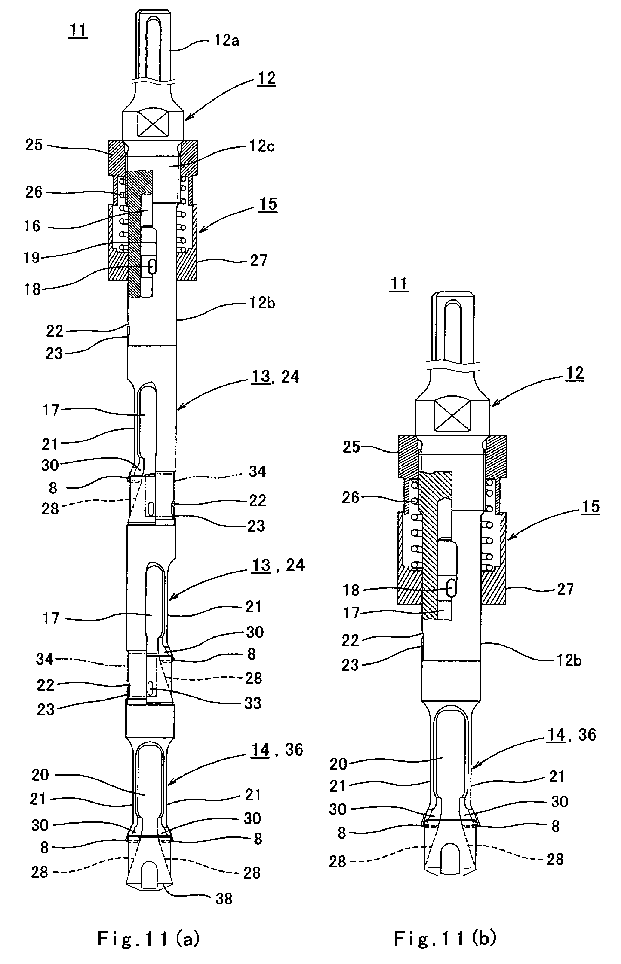

As described above, the intermediate expandable mechanism 13 of the diametrically expanded groove cutting apparatus 11 shown in Fig. 1(a) is detachably attached to the tip end side expandable mechanism 14 and the main body portion 12. As shown in Fig. 11(a), by detachably attaching the intermediate expandable mechanism 13 to another equivalent intermediate expandable mechanism 13, two intermediate expandable mechanisms 13 can be coupled to the lower portion of the main body portion 12, and the tip end side expandable mechanism 14 can be coupled to the lower portion of the intermediate expandable mechanism 13. In accordance with the diametrically expanded groove cutting apparatus 11 shown in Fig. 11(a), three diametrically expanded annular grooves 3 can be cut simultaneously on the inner peripheral wall of the anchor prepared hole 2. As above, in the case of cutting a plurality of (a desired number of) the diametrically expanded annular grooves 3, a required number of the intermediate expandable mechanism 13 can be coupled to each other based on the number of the diametrically expanded annular grooves 3 to be cut. In order that the upper and lower intermediate expandable mechanisms 13 shown in Fig. 11(a) can be coupled to each other, the step portion 37 is formed at the upper end of the core body 17 of the lower intermediate expandable mechanism 13, so that the tip end of the core body 17 is thin, as with the upper end of the core body 20 of the tip end side expandable mechanism 14 shown in Fig. 11(a).

Further, by changing, for example, the length of the attaching portion 12b of the main body portion 12 and the positions of the coupling holes 17b of the core bodies 17 and 20 and the exterior portions 24 and 36, the tip end side expandable mechanism 14 of the diametrically expanded groove cutting apparatus 11 shown in Fig. 1(a) can be configured to be detachably coupled to both the intermediate expandable mechanism 13 and the main body portion 12. With this configuration, as shown in Fig. 11(b) for example, the main body portion 12 can be directly coupled to the tip end side expandable mechanism 14 without being coupled to the intermediate expandable mechanism 13. With this, one diametrically expanded annular groove 3 can be cut on the inner peripheral wall of the anchor prepared hole 2. As a result, it is possible to provide the diametrically expanded groove cutting apparatus 11 which can cut one or a plurality of (a required number of) the diametrically expanded annular grooves 3 on the inner peripheral wall of the anchor prepared hole 2.

Moreover, since the intermediate expandable mechanism shown in Fig. 3(a) has only one flexible portion 21, the cross-sectional area of the stiff portion 29 can be made large. Therefore, it is possible to improve the stiffness of the intermediate expandable mechanism 13. As above, in a case where the stiffness of the intermediate expandable mechanism 13 can be improved, the diameter of the intermediate expandable mechanism 13 can be comparatively made small, so that the diametrically expanded annular groove 3 can be cut on the anchor prepared hole 2 having a small diameter.

In a case where the diameter of the intermediate expandable mechanism 13 is comparatively made large, the cross-sectional area of the stiff portion 29 can be made large. Therefore, the intermediate expandable mechanism 13 can obtain a required strength. As a result, it is possible to provide the intermediate expandable mechanism configured to include a plurality of the flexible portions 21.

Further, as shown in Fig. 11(a), since the engaging convex portion 23 of the intermediate expandable mechanism 13 is disposed above the flexible portion 21, the cutting blade 8 of the flexible portion 21 of the upper intermediate expandable mechanism 13 and the cutting blade 8 of the flexible portion 21 of the lower intermediate expandable mechanism 13 can be located so as to be opposed to each other with the core body 17 disposed therebetween. With this, the cutting resistance can be balanced, and the diametrically expanded annular grooves 3 can be cut stably.

In Embodiment 1, the main body portion 12, the exterior portion 24 of the intermediate expandable mechanism 13 and the exterior portion 36 of the tip end side expandable mechanism 14 shown in Fig. 1(a) are configured to be detachably coupled to one another. However, they may be fixedly coupled to one another. Moreover, the core body 17 of the intermediate expandable mechanism and the core body 20 of the tip end side expandable mechanism 14 can be detachably coupled to each other. However, they may be fixedly coupled to each other.

### Embodiment 2

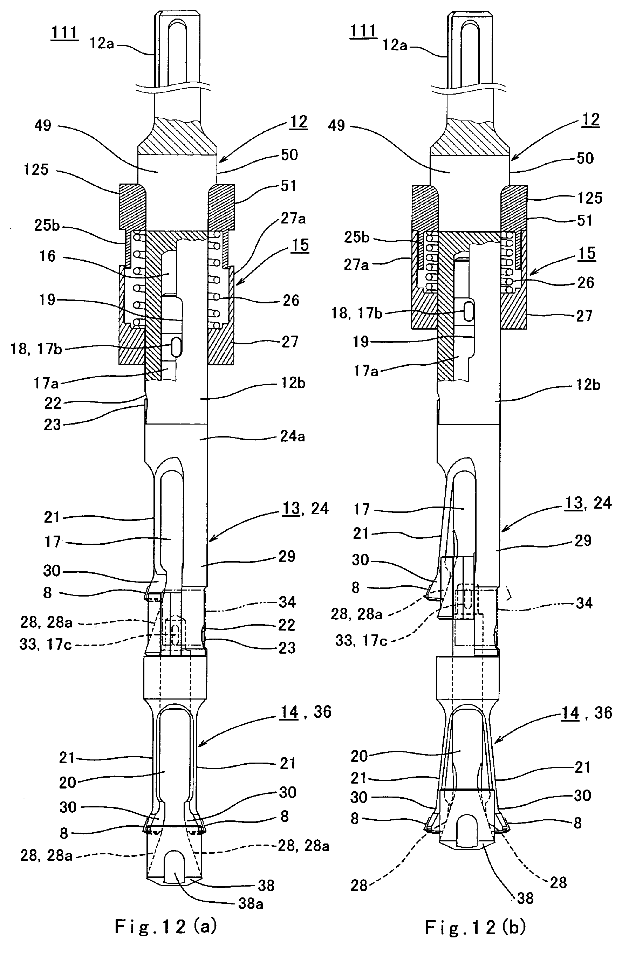

Next, Embodiment 2 of the diametrically expanded groove cutting apparatus according to the present invention will be explained with reference to Figs. 12 to 14. A difference between the diametrically expanded groove cutting apparatus 11 of Embodiment 1 shown in Figs. 1(a) and 1(b) and a diametrically expanded groove cutting apparatus 111 of Embodiment 2 shown in Figs. 12(a) and 12(b) is a configuration in which in a case where the diametrically expanded cutting blades 8 do not return to the diametrically contracted state during cutting of the anchor hole 41, the diametrically expanded groove cutting apparatus inserted into the anchor hole 41 can be forcibly pulled out from the anchor hole 41. Except for this, the diametrically expanded groove cutting apparatus 111 of Embodiment 2 is the same as the diametrically expanded groove cutting apparatus 11 of Embodiment 1. The same reference numbers are used for the corresponding members, and explanations thereof are omitted.

To be specific, as shown in Fig. 1(b), in the diametrically expanded groove cutting apparatus 11 of Embodiment 1, in a case where the diametrically expanded cutting blades 8 do not return to the diametrically contracted state during cutting of the anchor hole 41, the main body side sleeve 25 is rotated in a predetermined direction relatively with respect to the main body portion 12 using, for example, two wrenches. Thus, it is possible to forcibly cause the cutting blades 8 to move upward and to diametrically contract. Therefore, the diametrically expanded groove cutting apparatus 11 inserted into the anchor hole 41 can be pulled out from the anchor hole 41.

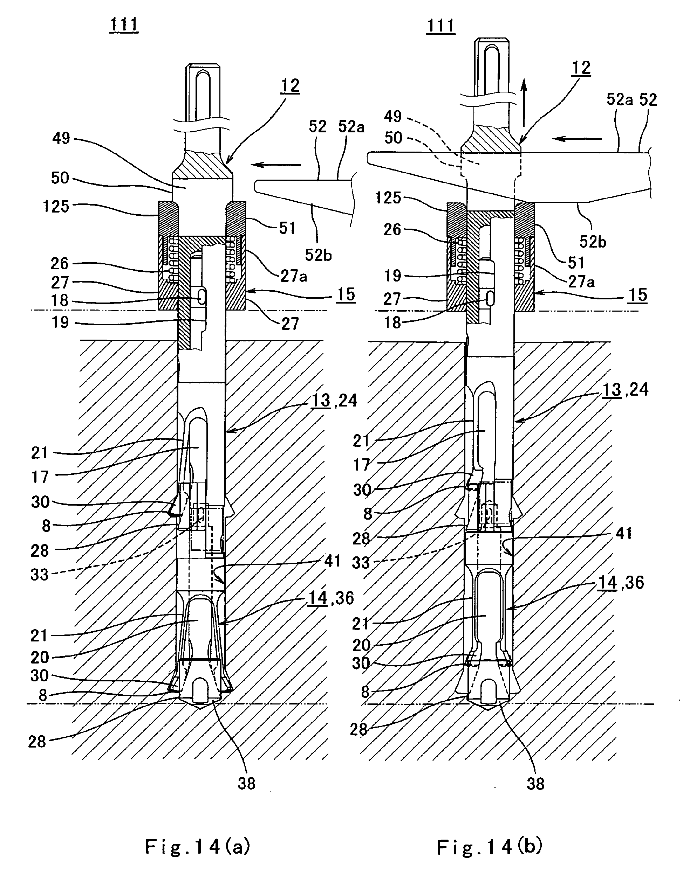

In contrast, as shown in Figs. 14(a) and 14(b), in the diametrically expanded groove cutting apparatus 111 of Embodiment 2, by hitting a cotter 52 into a cotter hole 49, it is possible to forcibly cause the cutting blades 8 to move upward and to diametrically contract. Therefore, the diametrically expanded groove cutting apparatus 111 inserted into the anchor hole 41 can be pulled out from the anchor hole 41.

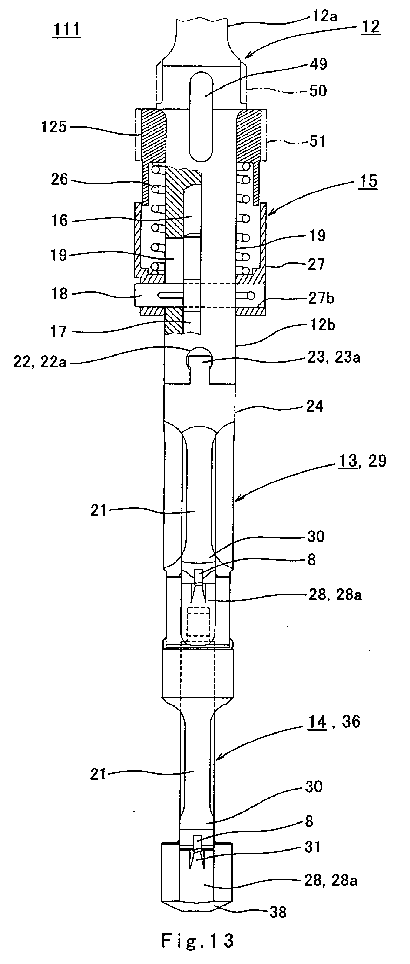

As shown in Figs. 12 and 13, an inner peripheral surface of a main body side sleeve 125 disposed on the diametrically expanded groove cutting apparatus 111 of Embodiment 2 has a short cylindrical shape, and an outer peripheral surface of the main body portion 12 inserted into the main body side sleeve 125 also has a short cylindrical shape. Therefore, the main body side sleeve 125 is movable in the axial direction (vertical direction) along the main body portion 12. The upward movement of the main body side sleeve 125 is stopped at a position of a stopper projection 50 formed on the outer peripheral surface of the main body portion 12.

As shown in Fig. 12(b), in a case where the main body side sleeve 125 and the core body side sleeve 27 move so as to approach each other, the tubular upper portion 27a of the core body side sleeve 27 overlaps with the tubular lower portion 25b of the main body side sleeve 125 so as to cover the tubular lower portion 25b, and an upper edge of the tubular upper portion 27a contacts an engaging convex portion 51 of the main body side sleeve 125. With this, the above approaching of the main body side sleeve 125 and the core body side sleeve 27 each other (upward movement of the core body side sleeve 27) stops.

As shown in Figs. 12 and 13, the cotter hole 49 is an elongate hole which passes through the main body portion 12 and has a predetermined length, and formed to extend along the axial direction of the main body portion 12. In the state of Fig. 14(a), the upper edge of the main body side sleeve 125 is in contact with the stopper projection 50, the lower portion of the cotter hole 49 is covered by the main body side sleeve 125, and the upper portion of the cotter hole 49 is open. In addition, the main body side sleeve 125 and the core body side sleeve 27 are in contact with each other, and the cutting blades 8 diametrically expand. The upper portion of the cotter hole 49 opens outside in the state of Fig. 14(a). Therefore, by hitting the cotter 52 into the opening of the cotter hole 49, as shown in Fig. 14(b), it is possible to cause the core bodies 17 and 20 to extend and to forcibly cause the diametrically expanded cutting blades 8 to diametrically contract.

Note that a procedure of cutting two diametrically expanded annular grooves 3 on the inner peripheral wall of the anchor prepared hole 2 using the diametrically expanded groove cutting apparatus 111 shown in Figs. 12(a) and 12(b) configured as above is the same as that of Embodiment 1, so that an explanation thereof is omitted.

The following will explain a mechanism and procedure of, in a case where, as shown in Fig. 14(a), the diametrically expanded cutting blades 8 of the diametrically expanded groove cutting apparatus 111 do not return to the diametrically contracted state shown in Fig. 14(b) by the spring force of the compression spring 26, and the diametrically expanded groove cutting apparatus 111 cannot be pulled out from the anchor hole 41, forcibly causing the cutting blades 8 to diametrically contract and pulling out the diametrically expanded groove cutting apparatus 111 from the anchor hole 41 as shown in Fig. 14(b). The reason why the diametrically expanded cutting blades 8 do not return to the diametrically contracted state by the spring force of the compression spring 26 may be because, for example, the cutting powder 40 clogs between the slide portions 30 and the expandable guiding portions 28.

First, as shown in Fig. 14(a), a tip end portion of the cotter 52 is hit into the upper portion of the cotter hole 49 which opens above the main body side sleeve 125. Then, as shown in Fig. 14(b), an upper edge 52a of the cotter 52 presses up the upper edge of the cotter hole 49 (the main body portion 12). At the same time, a lower edge 52b of the cotter 52 contacts the upper edge of the main body side sleeve 125, so that the main body side sleeve 125 can remain at an original height position so as not to move upward. Here, since the main body side sleeve 125 and the core body side sleeve 27 are in contact with each other, and the core body side sleeve 27 and the core bodies 17 and 20 are coupled to each other by the coupling pins 18 and 33, these remain inserted in the anchor hole 41. Then, the slide portions 30 coupled to the main body portion 12 can be caused to move relatively upward along the expandable guiding portions 28. Thus, the diametrically expanded cutting blades 8 can be forcibly contracted extremely easily in a short period of time, and the diametrically expanded groove cutting apparatus 111 can be easily pulled out from the anchor hole 41.

In the above embodiment, as shown in Figs. 14(a) and 14(b), the cotter hole 49 is formed on the main body portion 12. However, instead of the cotter hole 49, a cotter groove having the same function as the cotter hole 49 may be formed on the main body portion 12.

### Industrial Applicability

As above, the diametrically expanded groove cutting apparatus and the expandable mechanism used therein according to the present invention have an excellent effect of being able to cut a plurality of diametrically expanded annular grooves simultaneously on the inner peripheral wall of the anchor prepared hole for planting the anchor bar therein and an excellent effect of being able to easily pull out from the anchor hole in a short period of time the diametrically expanded groove cutting apparatus which has diametrically expanded and does not diametrically contract by, for example, the cutting powder, and are suitable for being applied to such a diametrically expanded groove cutting apparatus and an expandable mechanism used therein.

## Claims

1. A diametrically expanded groove cutting apparatus comprising:
a main body portion including a shank to be coupled to a driving portion; and
a plurality of expandable mechanisms disposed along an axial direction so as not to rotate with respect to the main body portion,
the driving portion applying an axial rotation to the diametrically expanded groove cutting apparatus to cause the diametrically expanded groove cutting apparatus to be able to cut a plurality of diametrically expanded annular grooves on an inner peripheral wall of an anchor prepared hole for planting an anchor bar therein by using cutting blades disposed on the expandable mechanisms, wherein:
the diametrically expanded groove cutting apparatus is extensible; and
the cutting blades diametrically expand or contract by a retracting operation or an extending operation of the diametrically expanded groove cutting apparatus.

2. The diametrically expanded groove cutting apparatus according to claim 1, wherein:
among the plurality of expandable mechanisms, an intermediate expandable mechanism coupled between a tip end side expandable mechanism disposed on a tip end side of the diametrically expanded groove cutting apparatus and the main body portion is removably attached to the tip end side expandable mechanism, the main body portion and the other intermediate expandable mechanism; and
the intermediate expandable mechanism includes a stiff portion sandwiched between the tip end side expandable mechanism and the main body portion.

3. The diametrically expanded groove cutting apparatus according to claim 2, wherein the tip end side expandable mechanism is removably attached to the main body portion.

4. The diametrically expanded groove cutting apparatus according to any one of claims 1 to 3, wherein:
each of the expandable mechanisms includes a core body which is coupled so as to be movable with respect to the main body portion in the axial direction within a predetermined range and is biased in an extending direction by biasing means, and a flexible portion having an elastic property;
an expandable guiding portion is formed at a tip end portion of the core body;
the flexible portion includes at a tip end portion thereof a slide portion which is guided by the expandable guiding portion so as to diametrically expand or contract; and
the cutting blade is disposed on the slide portion.

5. An expandable mechanism used in a diametrically expanded groove cutting apparatus capable of cutting a diametrically expanded annular groove on an inner peripheral wall of a preformed anchor prepared hole, wherein:
the expandable mechanism is able to be detachably coupled to a main body portion included in the diametrically expanded groove cutting apparatus and the other expandable mechanism;
the expandable mechanism includes a core body which is coupled so as to be movable with respect to the main body portion in an axial direction within a predetermined range, and a flexible portion having an elastic property;
an expandable guiding portion is formed at a tip end portion of the core body;
the flexible portion includes at a tip end portion thereof a slide portion which is guided by the expandable guiding portion so as to diametrically expand or contract; and
a cutting blade is disposed on the slide portion.

6. A diametrically expanded groove cutting apparatus comprising:
a main body portion including a shank to be coupled to a driving portion; and
an expandable mechanism disposed so as not to rotate with respect to the main body portion,
the diametrically expanded groove cutting apparatus being able to cut a diametrically expanded annular groove on an inner peripheral wall of an anchor prepared hole for planting an anchor bar therein by causing a cutting blade formed on the expandable mechanism to rotate by applying an axial rotation to the main body portion using the driving portion, wherein:
the expandable mechanism includes a core body;
the core body is disposed so as to be extensible with respect to the main body portion;
the cutting blade diametrically expands or contracts by a retracting operation or an extending operation of the core body;
the main body portion includes a cotter hole or a cotter groove; and
the cotter hole or the cotter groove is able to cause the core body to move with respect to the main body portion in an extending direction by a cotter hit into the cotter hole or the cotter groove.

7. The diametrically expanded groove cutting apparatus according to claim 6, further comprising:
a main body side sleeve and a core body side sleeve disposed so as to be movable with respect to the main body portion in an axial direction;
biasing means for biasing the main body side sleeve and the core body side sleeve in such a direction that the main body side sleeve and the core body side sleeve are separated from each other; and
a stopper projection which is disposed on the main body portion to stop a movement of the main body side sleeve in such a direction that the main body side sleeve is separated from the core body side sleeve, wherein
in a state in which the core body side sleeve is coupled to the core body, and the main body side sleeve and the core body side sleeve are in contact with each other, part of the cotter hole or the cotter groove is covered by the main body side sleeve.

8. The diametrically expanded groove cutting apparatus according to claim 6 or 7, wherein:
a plurality of the expandable mechanisms are included;
among the plurality of the expandable mechanisms, an intermediate expandable mechanism coupled between a tip end side expandable mechanism disposed on a tip end side of the diametrically expanded groove cutting apparatus and the main body portion is removably attached to the tip end side expandable mechanism and the main body portion;
the intermediate expandable mechanism includes a stiff portion sandwiched between the tip end side expandable mechanism and the main body portion; and
the tip end side expandable mechanism is removably attached to the main body portion.

9. The diametrically expanded groove cutting apparatus according to claim 8, wherein the intermediate expandable mechanism is removably attached to the other intermediate expandable mechanism.

10. The diametrically expanded groove cutting apparatus according to claim 6 or 7, wherein:
the expandable mechanism includes the core body which is coupled so as to be movable with respect to the main body portion in the axial direction within a predetermined range and is biased in the extending direction by the biasing means, and a flexible portion having an elastic property;
an expandable guiding portion is formed at a tip end portion of the core body;
the flexible portion includes at a tip end portion thereof a slide portion which is guided by the expandable guiding portion so as to diametrically expand or contract; and
the cutting blade is disposed on the slide portion.
